(19) Europäisches Patentamt
European Patent Office
Office européen des brevets

(11) Veröffentlichungsnummer: **0 028 351**
**B1**

(12) # EUROPÄISCHE PATENTSCHRIFT

(45) Veröffentlichungstag der Patentschrift: **22.02.84**

(51) Int. Cl.³: **C 09 B 62/008,** D 06 P 3/10, D 06 P 3/66

(21) Anmeldenummer: **80106407.2**

(22) Anmeldetag: **21.10.80**

(54) **Reaktivfarbstoffe und ihre Verwendung zum Färben OH- oder NH-haltiger Materialien.**

(30) Priorität: **31.10.79 DE 2943914**

(43) Veröffentlichungstag der Anmeldung: **13.05.81 Patentblatt 81/19**

(45) Bekanntmachung des Hinweises auf die Patenterteilung: **22.02.84 Patentblatt 84/8**

(84) Benannte Vertragsstaaten: **CH DE FR GB IT LI**

(56) Entgegenhaltungen:
**CH - A - 373 493**
**CH - A - 510 728**
**FR - A - 1 208 072**
**FR - E - 76 347**
**GB - A - 824 171**
**US - A - 3 494 911**
**US - A - 4 036 825**

**Die Akte enthält technische Angaben, die nach dem Eingang der Anmeldung eingereicht wurden und die nicht in dieser Patentschrift enthalten sind.**

(73) Patentinhaber: **BAYER AG, Zentralbereich Patente, Marken und Lizenzen, D-5090 Leverkusen 1, Bayerwerk (DE)**

(72) Erfinder: **Schallner, Otto, Dr., Jakob-Böhme-Strasse 11, D-5000 Köln 80 (DE)**
Erfinder: **Schündehütte, Karl Heinz, Dr., Klief 75, D-5090 Leverkusen 3 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

EP 0 028 351 B1

**Reaktivfarbstoffe und ihre Verwendung zum Färben und Bedrucken hydroxylgruppen- und/oder stickstoffhaltiger Materialien**

Gegenstand der vorliegenden Erfindung sind wertvolle neue Reaktivfarbstoffe der allgemeinen Formel

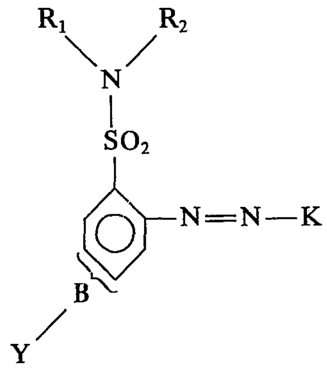

(I)

worin

$R^1$ und $R^2$ = Wasserstoff oder ein Substituent, beispielsweise Alkyl, Cycloalkyl, Aryl, Aralkyl oder wobei $R^1$ und $R^2$ zusammen, gegebenenfalls unter Einschluß eines oder mehrerer Heteroatome insbesondere Sauerstoff und/oder Stickstoff, einen Ring bilden, insbesondere einen 5- bis 6gliedrigen,

K =

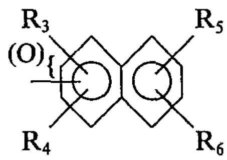

(II)

$R_3$ = $-OH$, $-NHR_7$, $-NH_2$,
$R_4$ = $-H$, $-SO_3H$,
$R_5$ und $R_6$ = Sulfo, gegebenenfalls acyliertes Hydroxy oder Amino, beispielsweise $-OCO-R_7$, $-NR_1-COR_7$, $-NR_1-CO-NR_1R_2$, wobei
$R_7$ = Alkyl, Cycloalkyl, Aryl, Aralkyl, wobei immer zwei der Reste $R_4$ bis $R_6$ Sulfo bedeuten,
Y = faserreaktive Gruppe
B = NH oder $N(C_1-C_4\text{-Alkyl})$.

Unter Alkylgruppen sind dabei insbesondere solche mit 1–4 C-Atomen zu verstehen, die gegebenenfalls Substituenten aufweisen können, z. B. Halogen wie Cl und Br, Alkoxy-, $-OH$, $-NH_2$, Alkylamino, Dialkylamino, $-CN$, $-SO_3H$, $-COOH$. Unter Arylgruppen sind insbesondere Phenylreste zu verstehen, die gegebenenfalls Substituenten aufweisen wie Cl, Br, $C_1-C_4$-Alkyl, $C_1-C_4$-Alkoxy, $C_1-C_4$-Alkylsulfonyl, $NO_2$, CN, $CF_3$, $SO_3H$, COOH.

Unter Aralkylresten werden insbesondere Benzylreste verstanden, die gegebenenfalls die für die Phenylreste genannten Substituenten aufweisen können.

Geeignete faserreaktive Gruppen Y sind in der Literatur in großer Zahl beschrieben, z. B. in Venkataraman:

The Chemistry of Synthetic Dyes, Band VI, Kapitel 1, Seite 1–209.

Bevorzugte Reste $R_1$ und $R_2$ sind Wasserstoff und gegebenenfalls substituiertes $C_1-C_4$-Alkyl oder Phenyl.

Bevorzugte Reste $R_7$ sind gegebenenfalls substituiertes $C_1-C_4$-Alkyl und Phenyl.

Bevorzugte Reaktivfarbstoffe entsprechen der allgemeinen Formel (I), worin B und $R_1$ bis $R_7$ die dort angegebene Bedeutung haben und

Y = 2,6-Difluor-5-chlor-pyrimidinyl(-4), 2-Fluor-5-chlor-6-methyl-pyrimidinyl-(4), 2,3-Dichlorchinoxalin-carbonyl-(6), Monofluortriazinyl, Monochlortriazinyl, 2-Chloracryloyl,

2-Bromacryloyl, 2,3-Dichlorpropionyl, 2,3-Dibrompropionyl oder

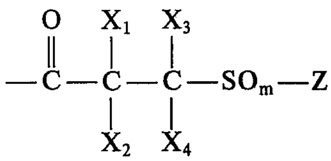

(III)

wobei

$X_1 - X_4$ = Wasserstoff oder abspaltbarer Rest oder $X_1$ bzw. $X_2$ zusammen mit $X_3$ bzw. $X_4$ eine C–C-Einfachbindung bilden, wobei mindestens ein Rest $X_1 - X_4$ für einen abspaltbaren Rest steht,

m = 1 oder 2

Z = Alkyl, Aryl, Hetaryl oder Aralkyl.

Bevorzugt sind weiterhin Reaktivfarbstoffe der Formel (I) mit

K =

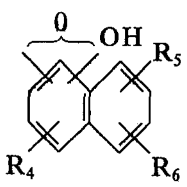

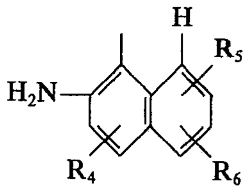

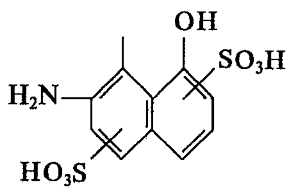

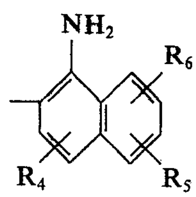

und insbesondere solche Reaktivfarbstoffe der Formel (I) mit

K =

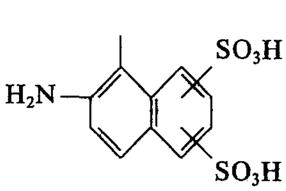

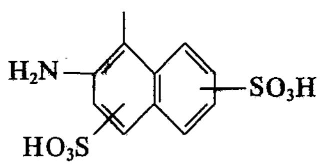

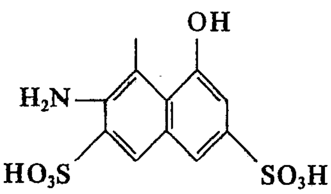

wobei die Alkyl-, Aralkyl- und Arylreste die obengenannte Bedeutung haben.

Geeignete Hetarylreste sind beispielsweise Thiophenyl, Benzthiophenyl, Benzthiazolyl, Benzimidazolyl, Pyridyl, Pyrimidyl, Benzofuranyl, Indolyl, Chinolyl, Carbazyl, Chinoxalyl, Benztriazolyl.

Aus der Patentschrift GB-A-824 171 sind ähnlich strukturierte Farbstoffe bekannt, die aber in der Kupplungskomponente (entsprechend dem Substituenten K der vorliegenden Anmeldung) nur einen Sulfonsäurerest enthalten. Diesen Farbstoffen gegenüber zeigen die erfindungsgemäßen Farbstoffe überlegene färberische Eigenschaften.

Die Herstellung der neuen Farbstoffe (I) kann nach verschiedenen Verfahren erfolgen, beispielsweise durch Umsetzung eines Farbstoffs der Formel

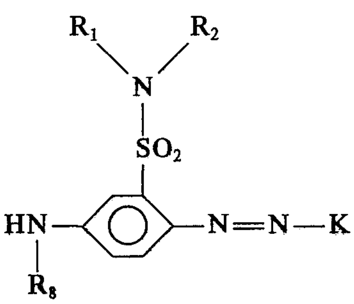

(IV)

oder eines Farbstoffvorprodukts der Formel

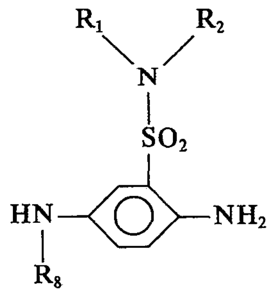

(V)

mit Verbindungen der Formel

Y–W (VI)

wobei

$R_8$ = H oder $C_1-C_4$-Alkyl
W = abspaltbarer Rest,
Y = Reaktivrest und gegebenenfalls folgende Diazotierung und Kupplung mit Kupplungskomponenten K–H (VIII).

Geeignete Verbindungen VI sind beispielsweise: 2,4-Difluorpyrimidin, 2,4-Difluor-6-methylpyrimidin, 2,6-Difluor-4-methyl-5-chlorpyrimidin, 2,4,6-Trifluorpyrimidin, 2,4-Difluorpyrimidin-5-ethylsulfon, 2,6-Difluor-4-chlorpyrimidin, 2,4,5,6-Tetrafluorpyrimidin, 2,4,6-Trifluor-5-chlorpyrimidin, 4,6-Difluor-4-methyl-5-brompyrimidin, 2,4-Difluor-5,6-dichlor- oder -dibrompyrimidin, 4,6-Difluor-2,5-dichlor- oder dibrompyrimidin, 2,6-Difluor-4-brompyrimidin, 2,4,6-Trifluor-5-brompyrimidin, 2,4,6-Trifluor-5-chlormethylpyrimidin, 2,4,6-Trifluor-5-nitropyrimidin, 2,4,6-Trifluor-5-cyanpyrimidin, 2,4,6-Trifluorpyrimidin-5-carbonsäuremethyl- oder -ethylester oder -5-carbonsäureamid, 2,6-Difluor-5-methyl-4-chlorpyrimidin, 2,6-Difluor-5-chlorpyrimidin, 2,4,6-Trifluor-5-methylpyrimidin, 2,4,5-Trifluor-6-methylpyrimidin, 2,4-Difluor-5-nitro-6-chlorpyrimidin, 2,4-Difluor-5-cyanpyrimidin, 2,4-Difluor-5-methylpyrimidin, 6-Trifluormethyl-5-chlor-2,4-difluorpyrimidin, 6-Phenyl-2,4-difluorpyrimidin, 6-Trifluormethyl-2,4-difluorpyrimidin, 5-Trifluormethyl-2,4,6-trifluorpyrimidin, 5-Trifluormethyl-2,4-difluorpyrimidin, 2,4-Dufluor-5-nitropyrimidin, 2,4-Difluor-5-trifluormethyl-pyrimidin, 2,4-Difluor-5-methylsulfonyl-pyrimidin, 2,4-Difluor-5-phenylpyrimidin, 2,4-Difluor-5-carbonamido-pyrimidin, 2,4-Difluor-5-carbomethoxypyrimidin, 2,4-Difluor-6-trifluormethylpyrimidin, 2,4-Difluor-5-brom-6-trifluormethylpyrimidin, 2,4-Difluor-6-carbonamido-pyrimidin, 2,4-Difluor-6-carbomethoxy-pyrimidin, 2,4-Difluor-6-phenylpyrimidin, 2,4-Difluor-6-cyanpyrimidin, 2,4,6-Trifluor-5-methylsulfonyl-pyrimidin, 2,4-Difluor-5-chlor-6-carbomethoxy-pyrimidin, 2,4-Difluor-5-sulfonamido-pyrimidin.

3,4,5,6-Tetrachlorpyridazin, 2,4,6-Trichlorpyrimidin, 2,4,5-Trichlorpyrimidin, 2,4,5,6-Tetrachlorpyrimidin, 5-Brom-2,4,6-trichlorpyrimidin, 2,6-Dichlorpyrimidin-4-carbonsäurechlorid, Dihalogen- und Trihalogentriazine, vorzugsweise Cyanurchlorid und Cyanurfluorid sowie 2-Amino-, 2-Hydrazino, 2-Alkyl- und Arylamino, 2-Hydroxy-, 2-Alkoxy und Phenoxy-, 2-Mercapto-, 2-Alkylthio- und 2-Arylthio-4,6-dichlor- und 4,6-difluortriazine, deren Alkyl und Arylsubstituenten weitere Gruppen wie OH, $NH_2$, N-Alkyl, O-Alkyl, $SO_3H$ oder COOH tragen können, 2,3-Dichlorchinoxalin-6-carbonsäure, Acrylsäure, 2-Chlor- oder 2-Brom-acrylsäurechlorid oder -bromid, 2,3-Dichloracrylsäurechlorid, 2,3-Dibromacrylsäurechlorid oder -Bromid, 2,3-Dibrompropionsäurechlorid oder -bromid, 3-Chloracrylsäurechlorid, 2-Chlor-3-methyl-acrylsäurechlorid, Trichloracrylsäurechlorid, 3-Sulfatopropionsäurechlorid, 3-Bromacrylsäurechlorid, Tribromacrylsäurechlorid, 3,3-Dichloracrylsäurechlorid, 3-Chlor-3-bromacrylsäurechlorid, 3,3-Dibromacrylsäurechlorid, Crotonoylchlorid, 2-Chlorcrotonoylchlorid, 2-Bromcrotonoylchlorid, 2-Bromcrotonoylchlorid, 2,3-Dichlorpropionsäurechlorid, 3-Chlorpropionsäurechlorid oder -bromid, 3,3-Dichlorpropionsäurechlorid, 3-Brompropionsäurechlorid, 3-Chlor-2-brompropionsäurechlorid, 2-Fluor-2-chlor-3,3-difluorcyclobutan-1-carbonsäurechlorid, $\beta$-/2,2,3,3-Tetrafluorcyclobutyl/-acrylsäurechlorid, 2-Chlor-, 2-Brom-, 3-Chlor-, 3-Brom-3-alkyl-, -aryl- und -hetrarylsulfonylpropionylchloride insbesondere 2-Brom-3-phenylsulfonylpropionylchlorid, 3-Brom-3-phenylsulfonylpropionylchlorid, 3-Chlor-3-phenylsulfonylpropionylchlorid, 2-Chlor-3-phenylsulfonylpropionylchlorid, 2,2-Dichlor-3-phenylsulfonylpropionylchlorid.

Geeignete Farbstoffvorprodukte der Formel (V) sind solche bei denen $R_1$ und $R_2$=Wasserstoff, Methyl, Ethyl, Propyl, Butyl, Isopropyl, Isobutyl, tert.-Butyl, Pentyl, Isopentyl, tert.-Pentyl, n-Hexyl-, 2-Ethylhexyl, Dodecyl, Tetradecyl, Hexadecyl, Octadecyl, 2-Diethylaminoethyl, 3-Dimethylaminopropyl, 3-Diethylaminopropyl, 2-Chlorethyl, 3-Chlorpropyl, 6-Chlorhexyl, 1-Diethylaminopentan-4-yl, 2-Hydroxyethyl, 2-Methoxyethyl, 2-Sulfohydroxyethyl, 3/(2'-Hydroxy)ethylmethylamino/-propyl, 3-Hydroxypropyl, 3-Methoxypropyl, 3-Ethoxypropyl, 3-Butoxypropyl, 2-Hydroxypropyl, 3-Hydroxybutyl,

Hydroxy-tert.-butyl, Dihydroxy-tert.-butyl, Trihydroxy-tert.-butyl, Carboxymethyl, 2-Carboxyethyl, 2-Cyanoethyl, 2-Carbonamidoethyl, 3-Carboxypropyl, 5-Carboxypentyl, 5-Cyanopentyl, 1,2-Dicarboxyethyl, 1,3-Dicarboxypropyl, Sulfomethyl, 2-Sulfoethyl, Cyclohexyl, 2-Methylcyclohexyl, 3-Methylcyclohexyl, 4-Methylcyclohexyl, Cyclohexylmethyl, 3,3,5-Trimethylhexyl, Bicyclo/2,2,1/hept-2-hymethyl, Phenyl, 2-Chlorphenyl, 3-Chlorphenyl, 4-Chlorphenyl, 2,3-Dichlorphenyl, 3,4-Dichlorphenyl, 2-Methylphenyl, 3-Methylphenyl, 3-Trifluormethylphenyl, 4-Methylphenyl, Benzyl, 2-Ethylbenzyl, 4-Ethylbenzyl, 2-Phenylethyl, 2,3-Dimethylphenyl, 3,4-Dimethylphenyl, 2,6-Dimethylphenyl, 2,4-Dimethylphenyl, 3,5-Dimethylphenyl, 2,5-Dimethylphenyl, 2-Ethyl-6-methylphenyl, 2-Isopropylphenyl, 2,4,5-Trimethylphenyl, 2,3,5-Trimethylphenyl, 2,4,6-Trimethylphenyl, 4-tert.-Butylphenyl, 2-sek.-Butylphenyl, 2,6-Diethylphenyl, 2-Ethyl-4,6-dimethylphenyl, 2,6-Diethyl-4-methylphenyl, 5-Methyl-1-phenylhex-3-yl, 4-Dodecylphenyl, 4-Cyclohexylphenyl, 2-Methyl-4-cyclohexylphenyl, 3-Acetylaminophenyl, 4-Acetylaminophenyl, 3-Oxalylaminophenyl, 4-Oxalylaminophenyl, 3-Glykolylaminophenyl, 4-Glykolylaminophenyl, 3-Acetylamino-4-methylphenyl, 5-Acetylamino-2-methylphenyl, 5-Acetylethylamino-2-methylphenyl, 2-Methyl-5-oxalylaminophenyl, 4-Benzoylethylamino-2-methylphenyl, 2-Methoxyphenyl, 2-Ethoxyphenyl, 2-Phenoxyphenyl, 2/2'-Methyl/-phenoxyphenyl, 3-Methoxyphenyl, 3-Ethoxyphenyl, 4-Methoxyphenyl, 4-Ethoxyphenyl, 4-/2'-Hydroxy/-ethoxyphenyl, 5-Acetylamino-2-methoxyphenyl, 4-Acetylamino-3-methoxyphenyl-, 3-Methoxy-4-methylphenyl, 5-Methoxy-2-methylphenyl, 2-Methoxy-5-methylphenyl, 4-Acetylamino-2-methoxy-5-methylphenyl, 2,4-Dimethoxyphenyl, 2,5-Dimethoxyphenyl, 2,5-Diethoxyphenyl, 4-Acetylamino-2,5-dimethoxyphenyl, 4-Benzoylamino-2,5-diethoxyphenyl, 2-Carboxyphenyl, 3-Carboxyphenyl, 4-Carboxyphenyl, 3-Cyanophenyl, 2-Sulfophenyl, 3-Sulfophenyl, 4-Sulfophenyl, 3-Sulfo-4-oxalylaminophenyl, 3-Sulfo-4-methylphenyl, 2-Methyl-4-sulfophenyl, 2-Methyl-3-axyolyl-amino-5-sulfophenyl, 3-Sulfomethylenphenyl, 4-Sulfomethylenphenyl, 2,4-Dimethyl-5-sulfophenyl, 4-Methoxy-5-sulfophenyl, 4-Ethoxy-5-sulfophenyl, 4-Phenoxy-5-sulfophenyl, 2-Methoxy-5-sulfophenyl, 2-Phenoxy-5-sulfophenyl, Butylen, Pentylen, Hexylen, Diethylenoxy ist, und $R_8$ Wasserstoff, Methyl, Ethyl, Propyl und Butyl.

Die Umsetzung der Farbstoffe (IV) bzw. der Farbstoffvorprodukte (V) mit einer Gruppe

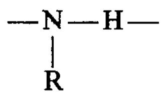

mit den reaktiven Derivaten wird je nach der Art der Ausgangsverbindungen in organischen, organisch-wäßrigem oder wäßrigem Medium bei Temperaturen von etwa $-10°C$ bis $+100°C$, vorzugsweise 0°C bis 50°C und vorzugsweise in Gegenwart von Säureakzeptoren wie Alkalicarbonat oder Alkalihydroxid durchgeführt.

Im Falle der Verwendung von Farbstoffvorprodukten werden diese nach der Kondensation mit den Reaktionskomponenten nach bekannten Verfahren mit den entsprechenden Kupplungskomponenten zum Endfarbstoff umgesetzt.

Als Kupplungskomponente K-H können beispielsweise dienen: 1-Hydroxynaphthalin-3,6-disulfonsäure, 1-Chlor-8-hydroxynaphthalin-3,6-disulfonsäure, 1-Hydroxynaphthalin-3,7-disulfonsäure, 1-Hydroxynaphthalin-3,8-disulfonsäure, 1-Hydroxynaphthalin-4,8-disulfonsäure, 1-Hydroxynaphthalin-3,6,8-trisulfonsäure, 2-Hydroxynaphthalin-3,6-disulfonsäure, 2-Hydroxynaphthalin-3,7-disulfonsäure, 2-Hydroxynaphthalin-4,8-disulfonsäure, 2-Hydroxynaphthalin-5,7-disulfonsäure, 2-Hydroxynaphthalin-6,8-disulfonsäure, 2-Hydroxynaphthalin-3,6,8-trisulfonsäure, 1,5-Dihydroxynaphthalin-3,7-disulfonsäure, 1,8-Dihydroxynaphthalin-3,6-disulfonsäure, 1-Ethoxy-8-hydroxynaphthalin-3,6-disulfonsäure, 2,7-Dihydroxynaphthalin-3,6-disulfonsäure, 1-Aminonaphthalin-5,7-disulfonsäure, 2-Aminonaphthalin-5,7-disulfonsäure, 2-Aminonaphthalin-6,8-disulfonsäure, 1-Aminonaphthalin-6,8-disulfonsäure, 2-Aminonaphthalin-4,8-disulfonsäure, 1-Aminonaphthalin-4,8-disulfonsäure, 1-Aminonaphthalin-4,7-disulfonsäure, 1-Aminonaphtalin-4,6-disulfonsäure, 2-Aminonaphthalin-3,7-disulfonsäure, 1-Aminonaphthalin-3,7-disulfonsäure, 1,5-Diaminonaphthalin-3,7-disulfonsäure, 2-Aminonaphthalin-3,6-disulfonsäure, 1-Aminonaphthalin-3,6-disulfonsäure, 2,7-Diaminonaphthalin-3,6-disulfonsäure, 1,8-Diaminonaphthalin-3,6-disulfonsäure, 2-Aminonaphthalin-4,6,8-trisulfonsäure, 1-Aminonaphthalin-4,6,8-trisulfonsäure, 2-Aminonaphthalin-3,6,8-trisulfonsäure, 1-Aminonaphthalin-3,6,8-trisulfonsäure, 8-Amino-1-hydroxynaphthalin-2,5-disulfonsäure, 6-Amino-1-hydroxynaphthalin-3,5-disulfonsäure, 8-Amino-1-hydroxynaphthalin-3,5-disulfonsäure, 2-Amino-1-benzolsulfonyloxynaphthalin-3,5-disulfonsäure, 8-Acetylamino-1-hydroxynaphthalin-3,5-disulfonsäure, 8-Benzoylamino-1-hydroxynaphthalin-3,5-disulfonsäure, 7-Amino-1-hydroxynaphthalin-3,6-disulfonsäure, 7-Acetylamino-1-hydroxynaphthalin-3,6-disulfonsäure, 8-Amino-1-naphthol-3,6-disulfonsäure, 8-Acetylamino-1-hydroxynaphthalin-3,6-disulfonsäure, 8-Benzoylamino-1-hydroxynaphthalin-3,6-disulfonsäure, 5-Amino-2-hydroxynaphthalin-4,7-disulfonsäure, 3-Amino-2-hydroxynaphthalin-5,7-disulfonsäure, 5-Amino-2-hydroxynaphthalin-4,8-disulfonsäure.

Die neuen Farbstoffe sind äußerst wertvolle Produkte, die sich für verschiedenste Anwendungszwecke eignen. Sie finden bevorzugtes Interesse für das Färben hydroxylgruppenhaltiger und stickstoffhaltiger Materialien, insbesondere von Textilmaterialien aus nativer und regenerierter

Cellulose, aus Wolle, ferner aus Seide, synthetischen Polyamid- und Polyurethanfasern sowie zum Färben von Papier.

## Beispiel 1

0,1 Mol des Farbstoffs der Formel

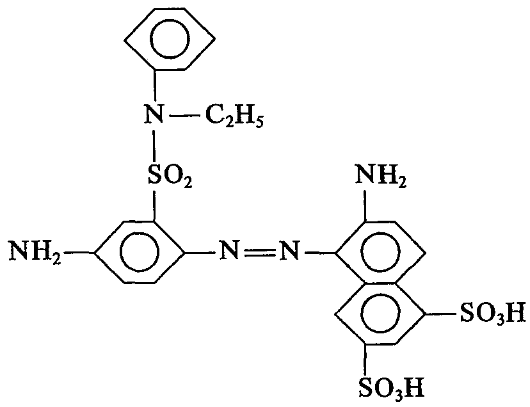

— hergestellt durch Kupplung von diazotiertem 2-Amino-5-nitrobenzol-1-sulfon-N-ethyl, N-phenylamid mit 2-Aminonaphthalin-5,7-disulfonsäure und anschließender Reduktion der Nitrogruppe zur Aminogruppe, oder durch Kupplung von diazotiertem 5-Acetylamino-2-amino-1-sulfon-N-ethyl, N-phenylamid mit der genannten Kupplungskomponente und anschließender Verseifung der Acetylaminogruppe zur Aminogruppe — werden in 600 ml Wasser neutral gelöst und durch Zutropfen von 29,4 g 3-Chlor-3-phenylsulfonylpropionylchlorid in 80 ml Aceton acyliert. Der pH-Wert wird durch Zugabe von 10%iger Sodalösung auf 6 gehalten. Nach beendeter Reaktion wird mit 20% Kaliumchlorid ausgesalzen, isoliert und im Vakuum bei 40°C getrocknet. Man erhält einen Farbstoff, der Wolle in klaren gelbstichig roten Tönen mit ausgezeichneter Naß- und Lichtechtheit färbt.

## Beispiel 2

0,1 Mol des Farbstoffs der Formel

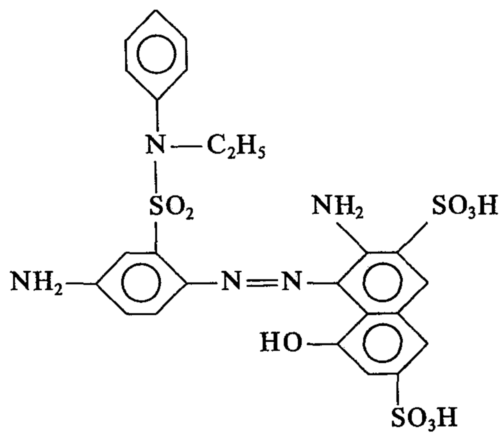

— hergestellt durch saure Kupplung von diazotiertem 2-Amino-5-nitrobenzol-1-sulfon-N-ethyl-N-phenylamid mit 2-Amino-8-hydroxynaphthalin-3,6-disulfonsäure und anschließender Reduktion der Nitrogruppe zur Aminogruppe oder durch Kupplung von diazotiertem 5-Acetylamino-2-amino-1-sulfon-N-ethyl, N-phenylamid mit der genannten Kupplungskomponente und anschließender Verseifung der Acetylaminogruppe zur Aminogruppe — werden in 1200 ml Wasser neutral gelöst und durch zutropfen von 29,4 g 3-Chlor-3-phenylsulfonylpropionylchlorid in 80 ml Aceton acyliert. Während der Umsetzung wird der pH-Wert durch Zugabe von 10%iger Sodalösung auf pH 6 gehalten. Die Isolierung erfolgt wie in Beispiel 1 beschrieben. Man erhält einen Farbstoff, der Wolle in blaustichig roten Tönen mit ausgezeichneten Naß- und Lichtechtheiten färbt. In der folgenden Tabelle sind weitere Reaktivfarbstoffe dieses Typs aufgeführt. Die erste Spalte gibt die Diazokomponente, die zweite die Kupplungskomponente an; die resultierende Azoverbindung wird anschließend durch Reduktion (R) oder Verseifung (V) in die zugehörige Aminoazoverbindung übergeführt.

Die Acylierung erfolgt nach dem im Beispiel 1 beschriebenen Verfahren mit dem dort genannten Acylierungsmittel. In der dritten Spalte wird der Farbton einer Wollreaktivfärbung des jeweiligen Farbstoffs angegeben.

| Beispiel | Diazokomponente | Kupplungskomponente | Farbton |
|---|---|---|---|
| 3 | 2-Amino-5-nitrobenzol-1-sulfon-N-ethyl-N-phenylamid | 2-Aminonaphthalin-3,6-disulfonsäure (R) | rot |
| 4 | desgl. | 2-Aminonaphthalin-3,7-disulfonsäure (R) | rot |
| 5 | desgl. | 2-Aminonaphthalin-6,8-disulfonsäure (R) | rotst. orange |
| 6 | desgl. | 2-Aminonaphthalin-4,8-disulfonsäure (R) | rot |
| 7 | desgl. | 2-Aminonaphthalin-3,6,8-trisulfonsäure (R) | rot |
| 8 | 2-Amino-5-acetylaminobenzol-1-sulfon-N-ethyl-N-phenylamid | 2-Aminonaphthalin-3,7-disulfonsäure (V) | rot |
| 9 | desgl. | 1-Hydroxynaphthalin-3,6-disulfonsäure (V) | rot |
| 10 | desgl. | 1-Hydroxynaphthalin-3,6-disulfonsäure (V) | rot |
| 11 | desgl. | 1-Hydroxynaphthalin-3,6,8-trisulfonsäure (V) | rot |
| 12 | desgl. | 1-Hydroxynaphthalin-3,8-disulfonsäure (V) | rot |
| 13 | desgl. | 8-Acetylamino-hydroxy-naphthalin-3,5-disulfonsäure (V) (2 äquival. Säurechlorid) | blaust. rot |
| 14 | desgl. | 7-Acetylamino-hydroxy-naphthalin-3,6-disulfonsäure (V) (2 äquival. Säurechlorid) | blaust. rot |
| 15 | desgl. | 8-Acetylamino-hydroxy-naphthalin-3,6-disulfonsäure (V) (2 äquival. Säurechlorid) | blaust. rot |
| 16 | desgl. | 2-Hydroxynaphthalin-3,6-disulfonsäure (V) | rot |
| 17 | 2-Amino-5-nitrobenzol-1-sulfon-N-ethyl-N-phenylamid | 2-Hydroxynaphthalin-3,6-disulfonsäure (R) | rot |
| 18 | desgl. | 1-Hydroxynaphthalin-4,8-disulfonsäure (R) | rot |
| 19 | desgl. | 2-Hydroxynaphthalin-3,7-disulfonsäure (R) | rot |
| 20 | desgl. | 2-Hydroxynaphthalin-5,7-disulfonsäure (R) | rot |

Fortsetzung

| Beispiel | Diazokomponente | Kupplungskomponente | Farbton |
|---|---|---|---|
| 21 | 2-Amino-5-nitrobenzol-1-sulfon-N-ethyl-N-phenylamid | 2-Hydroxynaphthalin-6,8-disulfonsäure (R) | gelbst. rot |
| 22 | desgl. | 1-Aminonaphthalin-6,8-disulfonsäure | rot |
| 23 | desgl. | 1-Aminonaphthalin-disulfonsäure (R) | blaust. rot |
| 24 | desgl. | 8-Benzoylamino-1-hydroxy-naphthalin-3,5-disulfonsäure (R) | blaust. rot |
| 25 | 2-Amino-5-nitrobenzol-1-sulfonamid | 2-Aminonaphthalin-5,7-disulfonsäure (R) | rot |
| 26 | 2-Amino-5-nitrobenzol-1-sulfon-N-phenylamid | desgl. | rot |
| 27 | 2-Amino-5-nitrobenzol-1-sulfon-N-methyl-N-phenylamid | desgl. | rot |
| 28 | 2-Amino-5-nitrobenzol-1-sulfon-N-methylsulfonsäure, N-phenylamid | desgl. | rot |
| 29 | 2-Amino-5-nitrobenzol-1-sulfon-N-ethyl-N-benzylamid | desgl. | rot |
| 30 | 2-Amino-5-nitrobenzol-1-sulfon-N-cyclohexylamid | desgl. | rot |
| 31 | 2 Amino-5-nitrobenzol-1-sulfon-N-cyclohexylamid | desgl. | rot |
| 32 | 2-Amino-5-nitrobenzol-1-sulfon-N-cyclohexyl-N-(2′-hydroxethyl)-amid | desgl. | rot |
| 33 | 2-Amino-5-nitrobenzol-1-sulfon-N-(2′-hydroxyethyl)-N-phenylamid | desgl. | rot |
| 34 | 2-Amino-5-nitrobenzol-1-sulfon-N,N-dicyclohexylamid | desgl. | rot |
| 35 | 2-Amino-5-nitrobenzol-1-sulfon-N-butyl-N-methylamid | desgl. | gelbst. rot |
| 36 | 2-Amino-5-nitrobenzol-1-sulfon-N-(2-cyanoethyl)-N-methylamid | desgl. | gelbst. rot |
| 37 | 2-Amino-5-nitrobenzol-1-sulfon-N-methyl-N-(2′-sulfonylethyl)-amid | desgl. | gelbst. rot |
| 38 | 2-Amino-5-nitrobenzol-1-sulfon-N-(2′-hydroxy-ethyl)-N-methylamid | desgl. | gelbst. rot |

Fortsetzung

| Beispiel | Diazokomponente | Kupplungskomponente | Farbton |
|---|---|---|---|
| 39 | 2-Amino-5-nitrobenzol-1-sulfon-N-methyl-N-(tetrahydrothiophen-1',1'-dioxid-3')-amid | 2-Aminonaphthalin-5,7-disulfonsäure (R) | gelbst. rot |
| 40 | 2-Amino-5-nitrobenzol-1-sulfon-N-methyl-N-furfurylamid | desgl. | gelbst. rot |
| 41 | 2-Amino-5-nitrobenzol-1-sulfonpyrolidid | desgl. | gelbst. rot |
| 42 | 2-Amino-5-nitrobenzol-1-sulfonpiperidid | desgl. | gelbst. rot |
| 43 | 2-Amino-5-nitrobenzol-1-sulfon-hexahydro-1'H-azepid | desgl. | gelbst. rot |
| 44 | 2-Amino-5-nitrobenzol-1-sulfon-(2'-methyl)-piperidid | desgl. | gelbst. rot |
| 45 | 2-Amino-5-nitrobenzol-1-sulfon-(1',2',3',4'-tetrahydro)-chinolid | desgl. | gelbst. rot |
| 46 | 2-Amino-5-nitrobenzol-1-sulfon-N-N-dimethylamid | desgl. | gelbst. rot |
| 47 | 2-Amino-5-nitrobenzol-1-sulfon-N-methylamid | desgl. | gelbst. rot |
| 48 | 2-Amino-5-nitrobenzol-1-sulfon-N-ethylamid | desgl. | gelbst. rot |
| 49 | 2-Amino-5-nitrobenzol-1-sulfon-N,N-diethylamid | desgl. | gelbst. rot |
| 50 | 2-Amino-5-nitrobenzol-1-sulfon-N,N-dipropylamid | desgl. | gelbst. rot |
| 51 | 2-Amino-5-nitrobenzol-1-sulfon-N,N-diisopropylamid | desgl. | gelbst. rot |
| 52 | 2-Amino-5-nitrobenzol-1-sulfon-N-isopropylamid | desgl. | gelbst. rot |
| 53 | 2-Amino-5-nitrobenzol-1-sulfon-N,N-di-(2'-methyl-propyl)amid | desgl. | gelbst. rot |
| 54 | 2-Amino-5-nitrobenzol-1-sulfon-N,N-di-(2'-hydroxy-propyl)-amid | desgl. | gelbst. rot |
| 55 | 2-Amino-5-nitrobenzol-1-sulfon-N,N-di(2'-hydroxy-ethyl)-amid | desgl. | gelbst. rot |

Fortsetzung

| Beispiel | Diazokomponente | Kupplungskomponente | Farbton |
|---|---|---|---|
| 56 | 2-Amino-5-nitrobenzol-1-sulfon-N-(3'-butoxy-propyl)-amid | 2-Aminonaphthalin-5,7-disulfonsäure (R) | gelbst. rot |
| 57 | 2-Amino-5-nitrobenzol-1-sulfon-N,N-di(2'-methoxy-ethyl)amid | desgl. | gelbst. rot |
| 58 | 2-Amino-5-nitrobenzol-1-sulfon-N,N-diphenylamid | desgl. | gelbst. rot |
| 59 | 2-Amino-5-nitrobenzol-1-sulfon-N,N-dibenzylamid | desgl. | gelbst. rot |
| 60 | 2-Amino-5-nitrobenzol-1-sulfon-N-benzylamid | desgl. | gelbst. rot |
| 61 | 2-Amino-5-nitrobenzol-1-sulfon-N-(2'-phenyl-ethyl)-amid | desgl. | gelbst. rot |
| 62 | 2-Amino-5-nitrobenzol-1-sulfon-N-benzyl-N-phenylamid | desgl. | gelbst. rot |
| 63 | 2-Amino-5-nitrobenzol-1-sulfon-N-butyl, N-(3'-methylphenyl)-amid | desgl. | gelbst. rot |
| 64 | 2-Amino-5-nitrobenzol-1-sulfon-N-ethyl, N-(2'-methylphenyl)-amid | desgl. | gelbst. rot |
| 65 | 2-Amino-5-nitrobenzol-1-sulfon-N-ethyl-N-(2'-chlorphenyl)-amid | desgl. | gelbst. rot |
| 66 | 2-Amino-5-nitrobenzol-1-sulfon-N-benzyl-N-(4'-sulfonphenyl)-amid | desgl. | gelbst. rot |
| 67 | 2-Amino-5-nitrobenzol-1-sulfon-N-ethyl-N-(2'-carboxyphenyl)-amid | desgl. | gelbst. rot |
| 68 | 2-Amino-5-nitrobenzol-1-sulfon-N-(3'-cyano-phenyl)-amid | desgl. | gelbst. rot |
| 69 | 2-Amino-5-nitrobenzol-1-sulfon-N-(4'-methoxy-phenyl)-amid | desgl. | gelbst. rot |
| 70 | 2-Amino-5-nitrobenzol-1-sulfon-N-(2'-methyl)-indolinid | desgl. | gelbst. rot |
| 71 | 2-Amino-5-nitrobenzol-1-sulfonmorpholid | desgl. | gelbst. rot |

Fortsetzung

| Beispiel | Diazokomponente | Kupplungskomponente | Farbton |
|---|---|---|---|
| 72 | 2-Amino-5-nitrobenzol-1-sulfonamid | 2-Amino-8-hydroxy-naphthalin-3,6-di-sulfonsäure (R) | blaust. rot |
| 73 | 2-Amino-5-nitrobenzol-1-sulfon-N-phenylamid | desgl. | blaust. rot |
| 74 | 2-Amino-5-nitrobenzol-1-sulfon-N-methyl-N-phenylamid | desgl. | blaust. rot |
| 75 | 2-Amino-5-nitrobenzol-1-sulfon-N-methylsulfon-säure-N-phenylamid | desgl. | blaust. rot |
| 76 | 2-Amino-5-nitrobenzol-1-sulfon-N-ethyl-N-benzylamid | desgl. | blaust. rot |
| 77 | 2-Amino-5-nitrobenzol-1-sulfon-N-cyclohexylamid | desgl. | blaust. rot |
| 78 | 2-Amino-5-nitrobenzol-1-sulfon-N-cyclohexyl-N-ethylamid | desgl. | blaust. rot |
| 79 | 2-Amino-5-nitrobenzol-1-sulfon-N-cyclohexyl-N-(2'-hydroxyethyl)-amid | desgl. | blaust. rot |
| 80 | 2-Amino-5-nitrobenzol-1-sulfon-N-(2'-hydroxy-ethyl)-N-phenylamid | desgl. | blaust. rot |
| 81 | 2-Amino-5-nitrobenzol-1-sulfon-N,N-dicyclo-hexylamid | desgl. | blaust. rot |
| 82 | 2-Amino-5-nitrobenzol-1-sulfon-N,N-diphenylamid | desgl. | blaust. rot |
| 83 | 2-Amino-5-nitrobenzol-1-sulfon-N,N-dibenzylamid | desgl. | blaust. rot |
| 84 | 2-Amino-5-nitrobenzol-1-sulfon-N-benzylamid | desgl. | blaust. rot |
| 85 | 2-Amino-5-nitrobenzol-1-sulfon-N-(2'-phenyl-ethyl)-amid | desgl. | blaust. rot |
| 86 | 2-Amino-5-nitrobenzol-1-sulfon-N-benzyl-N-phenylamid | desgl. | blaust. rot |
| 87 | 2-Amino-5-nitrobenzol-1-sulfon-N-butyl-N-(3'-methylphenyl)-amid | desgl. | blaust. rot |

Fortsetzung

| Beispiel | Diazokomponente | Kupplungskomponente | Farbton |
|---|---|---|---|
| 88 | 2-Amino-5-nitrobenzol-1-sulfon-N-ethyl-N-(2'-methylphenyl)-amid | 2-Amino-8-hydroxy-naphthalin-3,6-di-sulfonsäure (R) | blaust. rot |
| 89 | 2-Amino-5-nitrobenzol-1-sulfon-N-etyhl-N-(2'-chlorphenyl)-amid | desgl. | blaust. rot |
| 90 | 2-Amino-5-nitrobenzol-1-sulfon-N-benzyl-N-(4'-sulfophenyl)-amid | desgl. | blaust. rot |
| 91 | 2-Amino-5-nitrobenzol-1-sulfon-N-ethyl-N-(2'-carboxyphenyl)-amid | desgl. | blaust. rot |
| 92 | 2-Amino-5-nitrobenzol-1-sulfon-N-(3'-cyano-phenyl)-amid | desgl. | blaust. rot |
| 93 | 2-Amino-5-nitrobenzol-1-sulfon-N(4'-methoxy-phenyl)-amid | desgl. | blaust. rot |
| 94 | 2-Amino-5-nitrobenzol-1-sulfon-N,N-dimethylamid | desgl. | blaust. rot |
| 95 | 2-Amino-5-nitrobenzol-1-sulfon-N-methylamid | desgl. | blaust. rot |
| 96 | 2-Amino-5-nitrobenzol-1-sulfon-N-ethylamid | desgl. | blaust. rot |
| 97 | 2-Amino-5-nitrobenzol-1-sulfon-N,N-diethylamid | desgl. | blaust. rot |
| 98 | 2-Amino-5-nitrobenzol-1-sulfon-N,N-dipropylamid | desgl. | blaust. rot |
| 99 | 2-Amino-5-nitrobenzol-1-sulfon-N,N-diisopropylamid | desgl. | blaust. rot |
| 100 | 2-Amino-5-nitrobenzol-1-sulfon-N-isopropylamid | desgl. | blaust. rot |
| 101 | 2-Amino-5-nitrobenzol-1-sulfon-N,N-di-(2'-methylpropyl)-amid | desgl. | blaust. rot |
| 102 | 2-Amino-5-nitrobenzol-1-sulfon-N,N-di-(2'-hy-droxypropyl)-amid | desgl. | blaust. rot |
| 103 | 2-Amino-5-nitrobenzol-1-sulfon-N,N-di(2'-hy-droxyethyl)-amid | desgl. | blaust. rot |
| 104 | 2-Amino-5-nitrobenzol-1-sulfon-N-(3'-butoxy-propyl)-amid | desgl. | blaust. rot |

Fortsetzung

| Beispiel | Diazokomponente | Kupplungskomponente | Farbton |
|---|---|---|---|
| 105 | 2-Amino-5-nitrobenzol-1-sulfon-N,N-di(2'-methoxyethyl)-amid | 2-Amino-8-hydroxy-naphthalin-3,6-di-sulfonsäure (R) | blaust. rot |
| 106 | 2-Amino-5-nitrobenzol-1-sulfon-N-butyl-N-methylamid | desgl. | blaust. rot |
| 107 | 2-Amino-5-nitrobenzol-1-sulfon-N-(2-cyanoethyl)-N-methylamid | desgl. | blaust. rot |
| 108 | 2-Amino-5-nitrobenzol-1-sulfon-N-methyl-N-(2'-sulfonylethyl)-amid | desgl. | blaust. rot |
| 109 | 2-Amino-5-nitrobenzol-1-sulfon-N-(2'-hydroxy-ethyl)-N-methylamid | desgl. | blaust. rot |
| 110 | 2-Amino-5-nitrobenzol-1-sulfon-N-methyl-N-(tetrahydrothiophen 1',1'-dioxid-3')amid | desgl. | blaust. rot |
| 111 | 2-Amino-5-nitrobenzol-1-sulfon-N-methyl-N-furfurylamid | desgl. | blaust. rot |
| 112 | 2-Amino-5-nitrobenzol-1-sulfonpyrolidid | desgl. | blaust. rot |
| 113 | 2-Amino-5-nitrobenzol-1-sulfonpiperidid | desgl. | blaust. rot |
| 114 | 2-Amino-5-nitrobenzol-1-sulfonhexahydro-1'H-azepid | desgl. | blaust. rot |
| 115 | 2-Amino-5-nitrobenzol-1-sulfon-(2'-methyl)-piperidid | desgl. | blaust. rot |
| 116 | 2-Amino-5-nitrobenzol-1-sulfon-(1',2',3',4'-tetrahydro)-chinolid | desgl. | blaust. rot |
| 117 | 2-Amino-5-nitrobenzol-1-sulfon-(2'-methyl)-indolinid | desgl. | blaust. rot |
| 118 | 2-Amino-5-nitrobenzol-1-sulfonmorpholid | desgl. | blaust. rot |

Ebenfalls wertvolle Reaktivfarbstoffe werden erhalten, wenn man in den Beispielen 1—118 als Acylierungsmittel 2-Chlor-3-phenyl-, 2-Brom-3-phenyl- oder 3-Brom-3-phenylsulfonylpropionylchlorid bzw. 2,3-Dibrompropionylchlorid, 2-Bromacryloylchlorid, 2,4,6-Trifluor-5-chlorpyrimidin, 2,6-Difluor-4-methyl-5-chlorpyrimidin oder 2,3-Dichlorchinoxalin-6-carbonsäurechlorid verwendet.

Beispiel 119

29,1 g (0,1 mol) 2,5-Diaminobenzol-1-sulfon-N-ethyl-N-phenylamid werden in 50 ml Tetrahydrofuran gelöst und bei 0–5°C mit 28,0 g (0,105 Mol) 3-Chlor-3-phenylsulfonylpropionylchlorid in 30 ml Tetrahydrofuran versetzt. Die entstehende Salzsäure wird durch Zugabe von 20 g Natriumhydrogencarbonat abgefangen. Die Reaktion wird chromatographisch verfolgt. Nach beendeter Acylierung wird die Lösung des Reaktionsprodukts in eine Mischung aus 250 ml Wasser, 100 ml 30%ige Salzsäure und 200 g Eis getropft, mit 7 g Natriumnitrit diazotiert und mit 0,1 Mol 2-Aminonaphthalin-5,7-disulfonsäure gekuppelt. Man erhält einen Farbstoff, der mit dem in Beispiel 1 beschriebenen identisch ist.

Die in Beispiel 2 bis 118 beschriebenen Farbstoffe lassen sich ebenfalls nach dem oben beschriebenen Verfahren darstellen.

Beispiel 120

0,1 Mol 2-Aminonaphthalin-6-sulfonsäure wurden in 700 ml Wasser neutral gelöst und bei 0° mit 13,5 g Cyanurfluorid versetzt. Der pH-Wert wurde mit Natriumbicarbonat-Lösung auf 3,5–4 gehalten. Es wurde 30 Minuten nachgerührt, auf pH 6,5 gestellt und mit einer neutralen Lösung des Farbstoffs 1-(4'-Amino-2'-sulfon-N-ethyl-N-phenylamidophenylazo)-2-aminonaphthalin-5,7-disulfonsäure-Dinatriumsalz in 380 ml Wasser versetzt. Die Reaktionsmischung wurde 16 h bei Raumtemperatur gerührt und der pH-Wert bei 7–7,5 gehalten. Nach dem Aussalzen (5% KCl) Isolieren und Trocknen erhält man den folgenden Farbstoff:

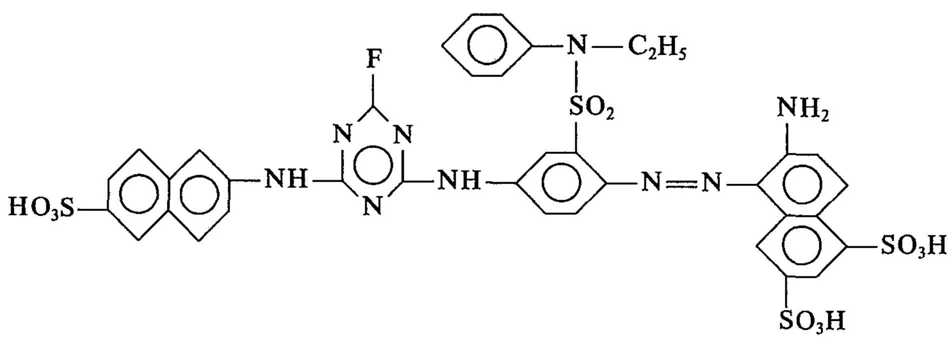

Er färbt Wolle und Baumwolle in gelbstichig roten Tönen.

In der folgenden Tabelle sind weitere Reaktivfarbstoffe dieses Typs aufgeführt. Die erste Spalte gibt den Aminoazofarbstoff, die zweite das eingesetzte Halogentriazin, die dritte den zweiten Substituenten des Triazins und die vierte den Farbton einer Reaktiv-Färbung auf Baumwolle wieder.

| Beispiel | Aminoazofarbstoffe | Triazin | 2. Substituent | Farbton |
|---|---|---|---|---|
| 121 | 1-(4'-Amino-2'-sulfon-N-ethyl-N-phenylamido-phenylazo)-2-amino-naphthalin-5,7-disulfon-säure | Trifluor-triazin | 3-Aminobenzol-sulfonsäure | gelbst. Rot |
| 122 | desgl. | desgl. | Ethylanilin | gelbst. Rot |
| 123 | desgl. | desgl. | Ammoniak | gelbst. Rot |
| 124 | desgl. | desgl. | Diethylamin | gelbst. Rot |
| 125 | desgl. | Trichlor-triazin | 2-Aminonaphthalin-6-sulfonsäure | gelbst. Rot |
| 126 | desgl. | desgl. | 3-Aminobenzol-sulfonsäure | gelbst. Rot |
| 127 | desgl. | desgl. | 4-Aminophenyl-(2'-sulfatoethyl)-sulfon | gelbst. Rot |
| 128 | desgl. | desgl. | Ethylanilin | gelbst. Rot |
| 129 | desgl. | desgl. | Diethylamin | gelbst. Rot |
| 130 | desgl. | desgl. | Ammoniak | gelbst. Rot |
| 131 | 1-(4'-Amino-2'-sulfon-N-ethyl-N-phenylamido-phenylazo)-2-amino-8-hydroxynaphthalin-3,6-disulfonsäure | desgl. | Ammoniak | blaust. Rot |
| 132 | desgl. | desgl. | 4-Aminophenyl-(2'-sulfatoethyl)-sulfon | blaust. Rot |
| 133 | desgl. | desgl. | 3-Aminobenzol-sulfonsäure | blaust. Rot |
| 134 | desgl. | desgl. | 2-Aminonaphthalin-6-sulfonsäure | blaust. Rot |
| 135 | desgl. | desgl. | Ethylanilin | blaust. Rot |
| 136 | desgl. | desgl. | Diethylamin | blaust. Rot |
| 137 | desgl. | Trifluor-triazin | Diethylamin | blaust. Rot |
| 138 | desgl. | desgl. | Ammoniak | blaust. Rot |
| 139 | desgl. | desgl. | Ethylanilin | blaust. Rot |
| 140 | desgl. | desgl. | 2-Aminonaphthalin-5-sulfonsäure | blaust. Rot |
| 141 | desgl. | desgl. | 3-Aminobenzol-sulfonsäure | blaust. Rot |
| 142 | desgl. | desgl. | 2-Aminonaphthalin-5,7-disulfonsäure | blaust. Rot |

Farbstoffe mit ähnlichen Eigenschaften erhält man, wenn man die in Beispiel 3–118 beschriebenen Chromophore mit den in Beispiel 120 bis 130 beschriebenen Halogentriazinderivaten umsetzt.

## Patentansprüche

1. Reaktivfarbstoffe der allgemeinen Formel

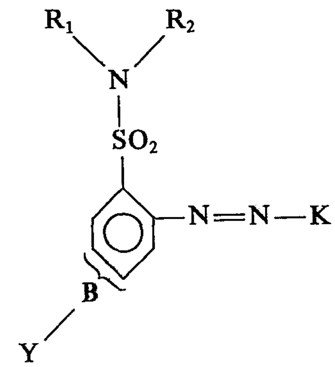

worin

$R_1$ und $R_2$ = Wasserstoff oder ein Substituent, beispielsweise Alkyl, Cycloalkyl, Aryl, Aralkyl oder wobei $R_1$ und $R_2$ zusammen, gegebenenfalls unter Einschluß eines oder mehrerer Heteroatome insbesondere Sauerstoff und/oder Stickstoff, einen Ring bilden, insbesondere einen 5- oder 6gliedrigen,

K =

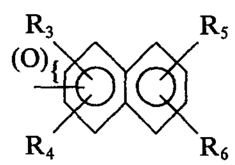

$R_3$ = $-OH$, $-NHR_7$, $-NH_2$
$R_4$ = $-H$, $-SO_3H$
$R_5$ und $R_6$ = Sulfo, gegebenenfalls acyliertes Hydroxy oder Amino, beispielsweise $OCO-R_7$, $-NR_1-COR_7$, $-NR_1-CO-NR_1R_2$, wobei
$R_7$ = Alkyl, Cycloalkyl, Aryl, Aralkyl, wobei immer zwei der Rete $R_4$ bis $R_6$ Sulfo bedeuten,
Y = faserreaktive Gruppe
B = NH oder $N(C_1-C_4\text{-Alkyl})$.

2. Reaktivfarbstoffe der allgemeinen Formel gemäß Anspruch 1, worin B und $R_1$ bis $R_7$ die dort angegebene Bedeutung haben und

Y = 2,6-Difluor-5-chlor-pyrimidinyl(-4), 2-Fluor-5-chlor-6-methyl-pyrimidinyl-(4), 2,3-Dichlorchinoxalin-carbonyl-(6), Monofluortriazinyl, Monochlortriazinyl, 2-Chloracryloyl, 2-Bromacryloyl, 2,3-Dichlorpropionyl, 2,3-Dibrompropionyl oder

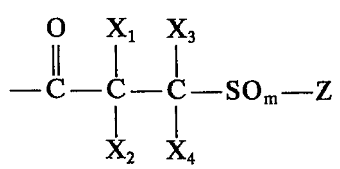

wobei

$X_1-X_4$ = Wasserstoff oder abspaltbarer Rest oder $X_1$ bzw. $X_2$ zusammen mit $X_3$ bzw. $X_4$ eine C–C-Einfachbindung bilden, wobei mindestens ein Rest $X_1-X_4$ für einen abspaltbaren Rest steht,
m = 1 oder 2
Z = Alkyl, Aryl, Hetaryl oder Aralkyl.

3. Farbstoffe der Ansprüche 1 bis 2 mit

K =

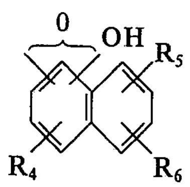

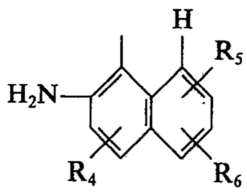

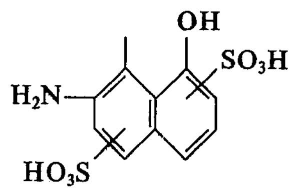

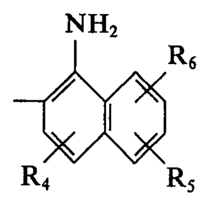

4. Farbstoffe der Ansprüche 1 bis 3 mit

K =

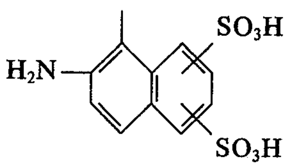

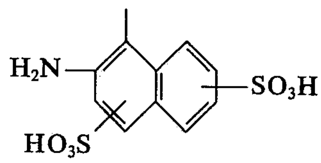

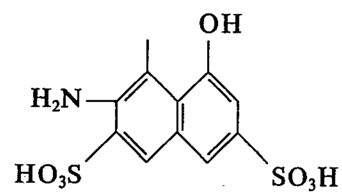

5. Verwendung der Farbstoffe der Ansprüche 1 bis 4 zum Färben und Bedrucken hydroxylgruppenhaltiger und stickstoffhaltiger Materialien.

**Claims**

1. Reactive dyestuffs of the general formula

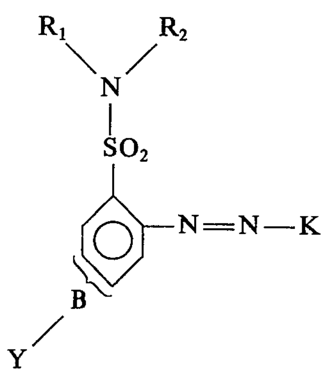

wherein

$R_1$ and $R_2$ = hydrogen or a substituent, for example alkyl, cycloalkyl, aryl or aralkyl, or wherein $R_1$ and $R_2$ together form a ring, in particular a 5-membered or 6-membered ring, optionally with the inclusion of one or more hetero-atoms, in particular oxygen and/or nitrogen,

K =

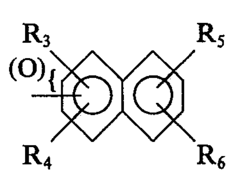

$R_3$ = $-OH$, $-NHR_7$ or $-NH_2$,
$R_4$ = $-H$ or $SO_3H$,
$R_5$ and $R_6$ = sulpho or optionally acylated hydroxyl or amino, for example $-OCO-R_7$, $-NR_1-COR_7$ or $-NR_1-CO-NR_1R_2$, wherein
$R_7$ = alkyl, cycloalkyl, aryl or aralkyl, always two of the radicals $R_4$ to $R_6$ denoting sulpho,
Y = a fibre-reactive group and
B = NH or $N(C_1-C_4\text{-alkyl})$.

2. Reactive dyestuffs of the general formula according to Claim 1, wherein B and $R_1$ to $R_7$ have the meaning given therein and

Y = 2,6-difluoro-5-chloro-pyrimidinyl-4, 2-fluoro-5-chloro-6-methyl-pyrimidinyl-4, 2,3-dichloroquinoxaline-carbonyl-6, monofluorotriazinyl, monochlorotriazinyl, 2-chloroacryl, 2-bromoacrylyl, 2,3-dichloropropionyl, 2,3-dibromopropionyl or

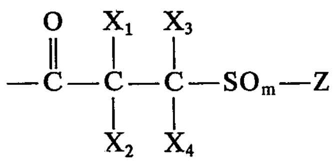

wherein

$X_1-X_4$ = hydrogen or a radical which can be split off, or $X_1$ or $X_2$, together with $X_3$ or $X_4$, form a C–C single bond, at least one radical $X_1-X_4$ representing a radical which can be split off,

m = 1 or 2 and

Z = alkyl, aryl, hetaryl or aralkyl.

3. Dyestuffs of Claims 1 to 2 in which

K =

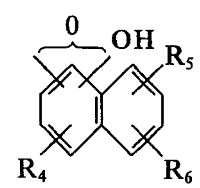
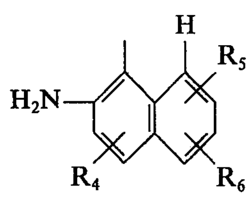
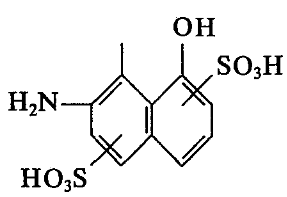
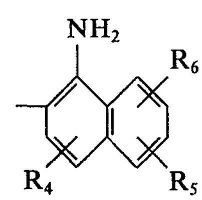

4. Dyestuffs of Claims 1 to 3 in which

K =

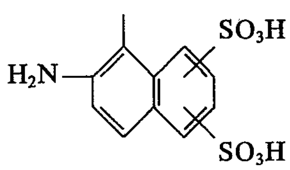
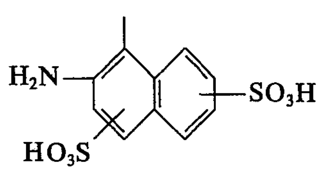
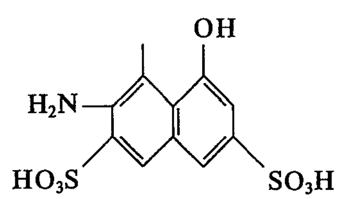

5. Use of the dyestuffs of Claims 1 to 4 for dyeing and printing materials containing hydroxyl groups or nitrogen.

**Revendications**

1. Colorants réactifs de formule générale

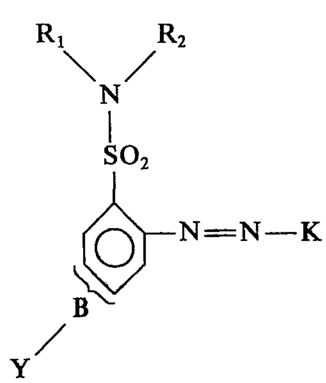

dans laquelle

$R_1$ et $R_2$ représentent de l'hydrogène ou un substituant, par exemple un groupe alkyle, cycloalkyle, aryle, aralkyle ou bien $R_1$ et $R_2$ pris ensemble, éventuellement en incluant un ou plusieurs hétéroatomes, notamment l'oxygène et/ou l'azote, forment un noyau, en particulier un noyau pentagonal ou hexagonal,

K représente

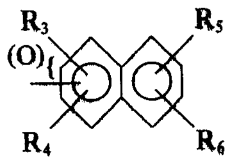

$R_3$ représente $-OH$, $-NHR_7$, $-NH_2$
$R_4$ représente $-H$, $-SO_3H$
$R_5$ et $R_6$ représentent un groupe sulfo, un groupe hydroxyle ou amino éventuellement acylé, par exemple $-OCO-R_7$, $-NR_1-COR_7$, $-NR_1-CO-NR_1R_2$, où
$R_7$ représente un groupe alkyle, cycloalkyle, aryle, aralkyle, deux des radicaux $R_4$ à $R_6$ représentant toujours un groupe sulfo,
Y représente un groupe pouvant réagir avec les fibres,
B représente NH ou N(alkyle en $C_1-C_4$).

2. Colorants réactifs répondant à la formule générale selon la revendication 1, dans laquelle B et $R_1$ à $R_7$ ont le sens qui est indiqué, et

Y représente un groupe 2,6-difluoro-5-chloro-pyrimidinyle-(4), 2-fluoro-5-chloro-6-méthyl-pyrimidinyl-(4), 2,3-dichloroquinoxaline-carbonyle-(6), monofluorotriazinyle, monochlorotriazinyle, 2-chloracryloyle, 2-bromacryloyle, 2,3-dichloropropionyle, 2,3-dibromopropionyle, ou

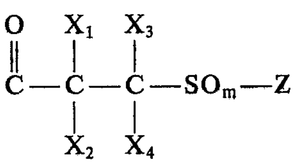

dans laquelle

$X_1$ à $X_4$ représentent de l'hydrogène ou un radical séparable, ou bien $X_1$ ou $X_2$ pris avec $X_3$ ou $X_4$ forment une liaison simple C—C, au moins un radical $X_1$ à $X_4$ représentant un radical séparable,

m vaut 1 ou 2, et
Z représente un radical alkyle, aryle, hétéro-aryle ou aralkyle.

3. Colorants selon les revendications 1 ou 2, dans lesquelles

K représente

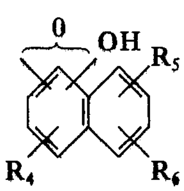
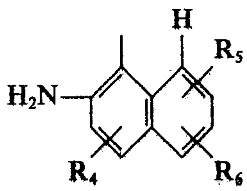
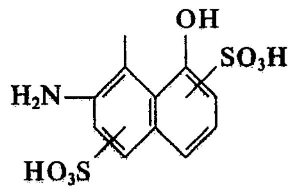
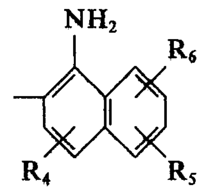

4. Colorants selon les revendications 1 à 3, dans lesquels

K représente

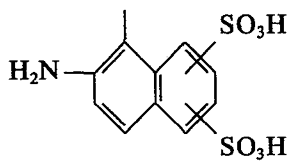 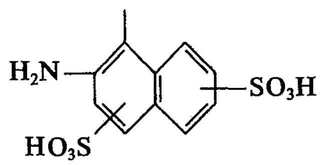 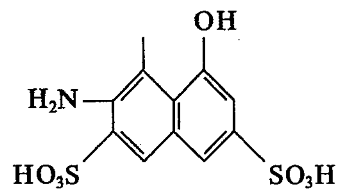

5. Utilisation des colorants selon les revendications 1 à 4 pour la teinture et l'impression de matières contenant des groupes hydroxyles et contenant de l'azote.